# EUROPEAN PATENT APPLICATION

(11) **EP 2 191 963 A1**
(43) Date of publication of application: **02.06.2010**
(21) Application number: 09176960.4
(22) Date of filing: 24.11.2009
(51) Int. Cl.: B32B 27/12, B32B 27/32, B32B 27/36, A47G 27/02, B60R 13/01

(54) **Adhesive absorbent mat for protecting substrates**

(30) Priority: 27.11.2008 IT MI20080390 U
(71) Applicant: Poletti, Gian Battista, 24040 Osio Sopra (BG) (IT); Crudo, Giuseppe, 20048 Carate Brianza (IT)
(72) Inventor: Poletti, Gian Battista, 24040 Osio Sopra (BG) (IT); Crudo, Giuseppe, 20048 Carate Brianza (IT)
(74) Representative: Petruzziello, Aldo

(57) **Abstract**

An adhesive mat (100) for protecting substrates, particularly car boots and upholstery, during the transport of liquid and/or wet products or of animals is disclosed, which comprises a layer (1) of absorbent non-woven fabric coupled to a polymer barrier film (2), said film (2) having a removable adhesive glue (3) in the form of strips on the face opposite to that coupled with said layer (1), said strips of adhesive being covered with throw-away silicone coated films.

## Description

The present invention refers to a mat for protecting car boots, upholstery and other substrates during the transport of animals and of liquid and/or wet products.

It is customary to cover the inside of a vehicle - or the bottom of the boot thereof - with cloths, blankets, oilcloths or absorbent sheets when liquid or wet materials (such as oil, petrol, milk, wine etc.), which can soak into the carpet, or domestic animals, which can pollute with their body fluids, are transported.

However, this system of protection holds the drawback of not ensuring a complete absorbency for a few reasons. The first is that said sheets or cloths cannot be fixed to the boot carpet. This is particularly problematical in the case of transport of animals which, by moving or scratching, can shift or tear part of the covering cloths leaving the carpet exposed, with the possibility of being soiled by the animal's body fluids (foam, urine, etc.) or by its hair. A further drawback is represented by the shifting of the sheets or cloths which can occur accidentally during the transport of containers of liquid. Furthermore, when oilcloths are used, there is no absorbency of any kind.

In the case of transport of animals, it is also possible to provide them with disposable nappies (trainers). However, these offer a limited protection since they are intended exclusively to contain urine and not other body fluids or hair. Furthermore, since the trainers are disposable systems, they cannot be used more than once with a consequent financial disadvantage.

Also known to the art are mats produced in the form of carpets to protect the car boot. This type of product is produced by weaving of threads of synthetic fibres. However, this type of mat proves particularly heavy, inflexible and therefore lacking in versatility in that it cannot be used to cover areas other than the car boot such as, for example, seats, animal carriers etc.

Object of the present invention is to eliminate the drawbacks of the prior art by providing a protective system for substrates (such as, for example, a carpet) that is able to absorb liquids and body fluids and also to retain any animal hair, preventing the spreading and the spilling of said liquids, that is stable in the position of application without the possibility of any shifting and that is also able to withstand knocks and scratches such as, for example, attacks with claws or possible biting by domestic animals.

A further object of the present invention is to provide a protective system that can be shaped to any form of substrate, that is washable to ensure a high degree of hygiene, that is easy to mount and practical for the daily use and that can be recycled at the end of its life.

These objects are achieved in accordance with the invention with the characteristics listed for the product according to appended independent claim 1.

Advantageous embodiments of the invention are apparent from the dependent claims.

The subject matter of the present invention is an adhesive mat for protecting car boots, upholstery and other surfaces during the transport of liquid and/or wet products or of animals, which comprises an absorbent layer of non-woven fabric coupled to a polymer barrier film, wherein said film has a removable adhesive glue on its face opposite that coupled with said absorbent layer and said adhesive is covered with one or more throw-away silicone-coated films, said adhesive glue adhering to the surface of the substrate after the removal of said throw-away films.

Further characteristics of the invention will be made clearer by the detailed description that follows, referring to a purely exemplifying and therefore non limiting embodiment thereof, illustrated in the appended drawings, wherein:
Figure 1a is a top plan view of a mat according to the present invention, showing the non-woven fabric;
Figure 1b is a side view of the mat of Figure 1, showing the non-woven fabric coupled to the barrier film;
Figure 1c is an enlarged view of the detail A of Figure 1b, showing in detail the layer of non-woven fabric and the thickness of the barrier film;
Figure 2 is the bottom view of the mat of Figure 1a, showing the surface of the film containing the adhesive in the form of strips.

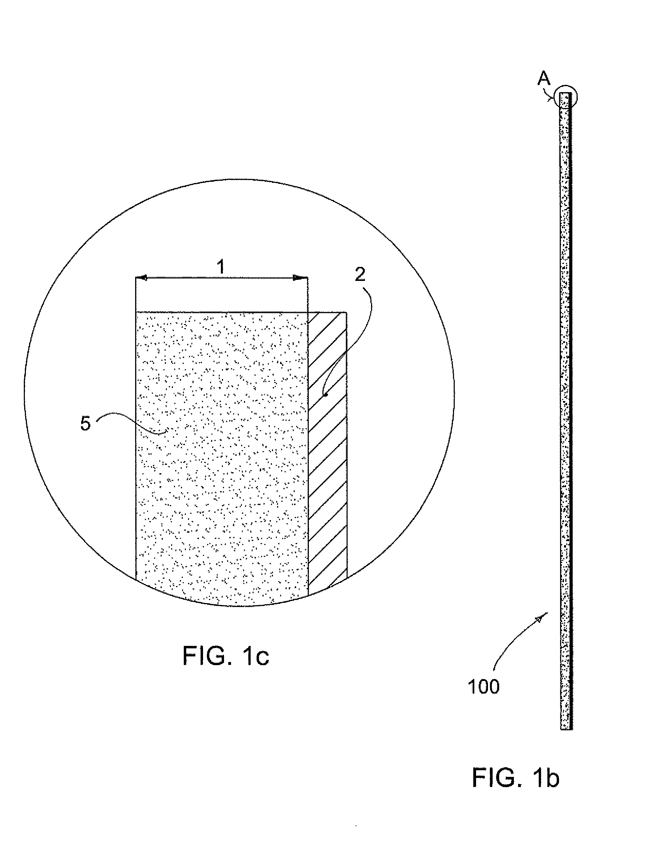

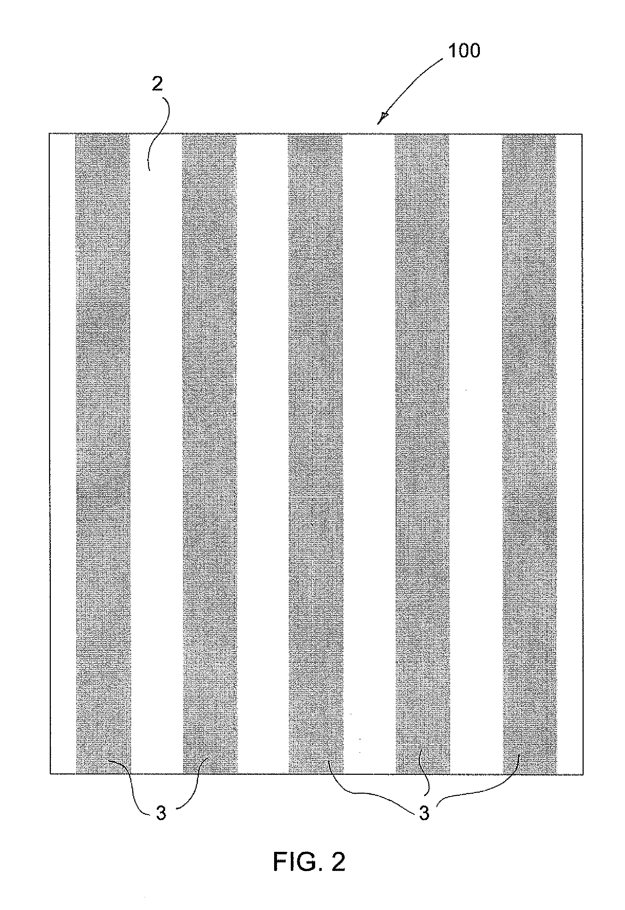

With reference to the appended figures, a mat according to the present invention is indicated as a whole with the reference numeral 100. It is composed of a non-woven fabric 5 in the form of a layer 1 (Figure 1c) coupled to a barrier film 2 (Figure 1c and Figure 2). The barrier film 2 has a removable adhesive 3 (Figure 2) on the face opposite the one coupled with the layer 1 of non-woven fabric 5. The adhesive 3 is then covered with one or more throw-away silicone-coated films (not shown in the figures) which serve to protect the adhesive until the mat is used. The thickness of the layer 1 of non-woven fabric 5 does not affect the present invention. Said thickness is generally greater than 1 mm; in a preferred embodiment, said thickness is 4-5 mm.

The non-woven fabric 5 of the layer 1 is formed by textile fibres of one or more polymer materials such as polyester, polypropylene, acrylic polymers, metacrylic polymers, acrylic polymers modified with acrylonitrile (modacrylic fibre), polyamide, polymers derived from cornstarch or from other cereals, permanent flame resistant fibres and silver-loaded bioactive fibres. The material of the non-woven fabric is preferably polyester.

What is meant herein by non-woven fabric is a product made by processes other than weaving and also other than knitting, for example by arranging the fibres in layers and by joining them together mechanically with adhesives or with heat processes, and thus a product not obtained by weaving of threads to give a crossing of threads in warp and weft by means of a loom.

The fibres of the non-woven fabric are in the form of simple flock or of an intimate mixture of flocks. These fibres are preferably mechanically cohesioned by needle punching, also indicated as needle felting, to give a soft but mechanically strong product having a high unit weight, generally at least 100 g/m² up to about 600 g/m². Said non-woven fabric further has a high liquid absorptive power and a weave such as to allow the animal hair to be retained.

The non-woven fabric 5 of the layer 1 can also have prints or patterns on the exposed surface (i.e., the surface opposite that coupled to the barrier film) or it can be coloured.

The layer 1 can consist of a non-woven fabric 5 impregnated with active substances. What is meant herein by active substances are additive compounds that show some activity, for example, which have a deodorant, indicator or surface modifier activity, etc. Examples of active substances are perfume fragrances and animal heath indicators such as tests for urine, pheromones, etc.

The addition of such substances to the fabric can take place during the coupling of the non woven fabric 5 with the barrier film or by means of subsequent dipping of the coupled product (mat) 100.

The barrier film indicated with the reference numeral 2 in Figure 2 is suitable for retaining liquids and for coupling with the surface of the substrate to be protected. It generally has a smaller thickness than that of the layer 1. The thickness of this film 2 can generally range from 0.010 mm to 0.200 mm; in one embodiment it is about 100 my (corresponding to 0.092 mm).

Furthermore, the film 2 is formed by a film of polymer materials such as, for example, polypropylene, polyethylene, polyester, polyamide, polyolephin and cornstarch derived polymers. In a preferred embodiment, the material of the film 2 is the same material as that of the non-woven fabric 5 so as to have a mat 100 formed of a single material. This favours the complete and homogeneous disposal of the mat.

The film 2 and the layer 1 are held together by hot melt glues. These glues can be applied to the whole surface to form a tie-layer or only to some areas.

As stated above, the barrier film 2 is suitable for coupling to the surface of the substrate to be protected thanks to the presence of the removable adhesive glue 3.

The removable adhesive or glues are intended herein to include all those glues which have low or moderate peeling force, which allows the detachment and the attachment to the substrate multiple times without damaging said substrate.

With reference to Figure 2, the adhesive 3 is in the form of strips or bands, which are positioned on the film 2.

Alternatively the adhesive 3 can also be disposed on the film 2 in patches or in other shapes: however, the arrangement of the adhesive on the surface of the film is not binding for the purposes of the present invention.

In the case of the arrangement in strips, the position of the strips of adhesive 3 is not binding for the purposes of the present invention. They can be positioned lengthwise, crosswise or diagonally on the surface of the film 2.

Furthermore, said adhesive strips 3 can be closely or widely spaced and this is not binding for the purposes of the present invention. In a preferred embodiment the adhesive strips 3 are longitudinal and are spaced apart by about 100 mm.

The number and the width of the adhesive strips 3 are also not binding for the purposes of the present invention and they depend upon the form in which the mat of the present invention is presented, for example in the form of a roll or shaped with a pre-fixed profile and size.

The adhesive strips 3 are covered by protective strips (not shown in Figure 2) formed of throw-away silicone-coated films which are removed at the time of use in order to allow the strips of adhesive 3 of the mat of the present invention to adhere to the surface of the substrate to be protected. In the event of the adhesive being distributed on the surface of the film 2 in different shapes from that in strips, the throw-away silicone-coated films will have the same shape as the adhesive to be covered.

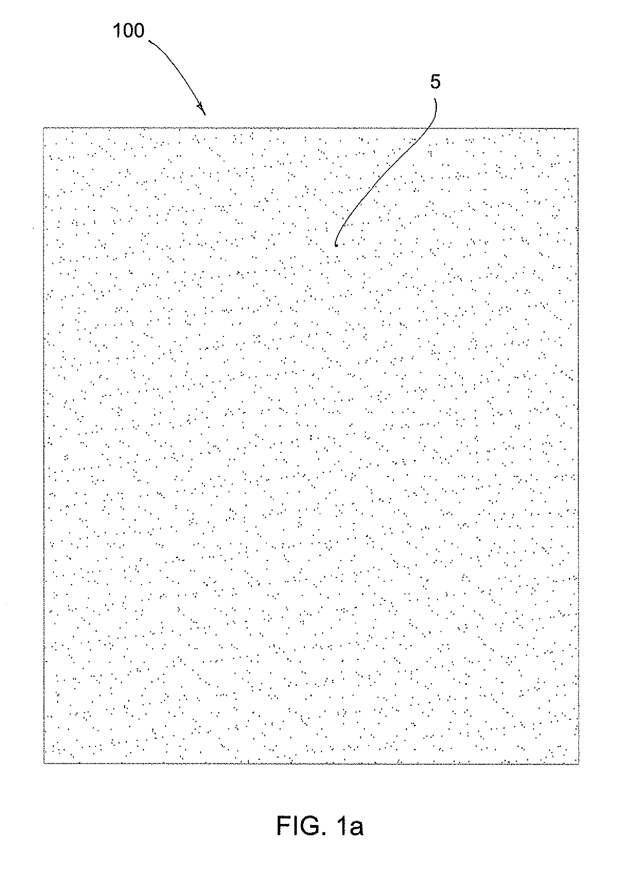

With reference to the mat illustrated in Figures 1-2, the mat of the present invention can be prepared by a process comprising the following steps:
a) Coupling of the layer 1 of non-woven fabric 5 with the barrier film 2, preferably in the presence of hot melt glues;
b) spreading of a removable adhesive glue in the form of strips 3 on the coupled product obtained from step a) and applying strips of throw-away silicone-coated film on the adhesive strips 3 of the glue, obtaining a roll;
c) optionally, cutting to size and/or to shape a portion of the roll obtained in step b) and packaging of the cuts so obtained.

The above described process can also include a step aₒ) of preparation of the non-woven fabric before carrying out stage a). In this case, step aₒ) is preferably carried out by opening of the textile fibres, by carding to form the lap, by mechanical binding of the fibres by means of needle punching and of heat setting, if any. In this manner a layer of non-woven fabric with high absorbency and mechanical strength having the desired thickness is obtained.

Step a) is essentially a hot rolling which takes place by passing the non woven fabric on rollers, applying perfumed resins before carrying out the hot melt bonding with the barrier film 2, also fed by a roller system. In this manner a tenacious bond between the material of the layer and that of the film is obtained.

In step b) it is possible to add, before their use, the hot melt glues with various perfumed fragrances, as stated above.

Cutting step c) can be carried out by using a guillotine system in set shapes and sizes for the various applications. The shape of the pieces thus cut can be square or rectangular. Or else, shaped pieces can be obtained by using systems able to obtain shapes modelled even with rounded profiles.

Step c) of the above described process can be followed by a printing step d) to obtain the exposed surface of the mat printed and showing various subjects. This printing is preferably done with non toxic natural dyes and sublimation technology.

Said step d) can also be carried out after the step of obtaining rolls (step b) and before the cutting step c).

The packaging of the cut pieces of the mat of the present invention having set lengths is generally carried out by wrapping with a heat shrink film.

The mat of the present invention is used by removing the throw-away protective films from the adhesive and by putting said adhesive into contact with the substrate to be protected so as to leave the exposed surface of the non-woven fabric in contact with the liquid products or with the animals.

The use of the above described multilayer material for the protection of car boots, upholstery and other substrates from spillage of liquid and/or wet products during the transport of animals and/or of liquid products has proved highly advantageous since it allows liquids to be absorbed safely by using a system that is easy to assemble and practical in daily use, adaptable to any shape of substrate and cheap.

The mat of the present invention, having a high mechanical strength, unexpectedly shows a high absorption power. For example, in a particular embodiment with a thickness of non-woven fabric of about 5 mm and a surface area of 1 m², it is possible to absorb about 2.5 litres of liquid in a few seconds.

A further advantage of the mat of the invention is that it meets the requirements of the standard FMVSS 302/ISO 3795 relating to the fire and smoke classification used in the automobile sector.

A further advantage lies in the fact that the adhesive glue is of the removable type so it is possible to detach the mat from the substrate such as carpet, fabrics, base sheet metal, etc. without damaging said substrate.

In addition, thanks to the presence of said adhesives, it is possible to make the mat adhere firmly to the substrate, ensuring its grip, adherence and stability in the desired position. Furthermore, the mat of the present invention, being a textile product, can be applied to any form of substrate or base and adapts thereto.

A further advantage is that, thanks to the above listed characteristics of the non-woven fabric, said layer is highly tenacious so that it withstands scratching and biting by animals, is able to hold animal hairs, does not allow the formation of mites or their proliferation, cannot be attacked by mildews or bacteria and is extremely hygienic.

Furthermore, the present mat is not subject to rotting or decay in the presence of liquids.

Furthermore, thanks to the possibility of being impregnated with perfumed fragrances, it is also possible to combat any animal unpleasant odours, particularly those given off during the mating period.

A further advantage lies in the fact that the materials of the mat can be completely recycled (and in some cases can also be bio-composted) and that they can be brushed and washed in cold water or dry cleaned, so the mat is highly environment friend.

As stated above, the mat of the present invention can be used as absorbent material for liquids in the domestic animal, child and medical sector, and can be used to protect kennels, apartments, veterinary surgeries, campers, sofas, animal carriers or in any other setting in which an underlying surface is to be protected.

Numerous variations and modifications of detail within the reach of a person skilled in the art can be made to the present invention without thereby departing from the scope of the invention as set forth in the appended claims.

## Claims

1. An adhesive mat (100) for protecting substrates, particularly car boots and upholstery, during the transport of liquid and/or wet products or of animals, comprising
a layer (1) of absorbent non-woven fabric (5) coupled to a polymer barrier film (2), **characterised in that**
said film (2) has a removable adhesive glue (3) placed on the opposite surface to that coupled to said layer (1) and said adhesive glue (3) is covered with one or more throw-away silicone-coated films,
said adhesive glue (3) adhering to the surface of the substrate to be protected after removal of said throw-away silicone coated films.

2. An adhesive mat (100) according to claim 1 wherein the adhesive glue (3) is in the form of strips.

3. An adhesive mat (100) according to claim 1 or 2 wherein the non-woven fabric (5) is formed of textile fibres of one or more polymer materials such as polyester, polypropylene, acrylic polymers, metacrylics, polyamide modacrylics, polymers derived from cornstarch or from other cereals, permanent flame resistant fibres and silver-loaded bioactive fibres, the material of the non-woven fabric (5) being preferably polyester.

4. An adhesive mat (100) according to claim 3 wherein said fibres are in the form of simple flock or of an intimate mixture of flocks and are mechanically cohesioned by needle punching.

5. An adhesive mat (100) according to any one of the preceding claims, in which the thickness of the non-woven fabric (5) is greater than 1 mm, preferably 4-5 mm.

6. An adhesive mat (100) according to any one of the preceding claims in which the non-woven fabric (5) is impregnated with active substances, preferably chosen among perfumed fragrances and animal health indicators such as tests for urine and pheromones.

7. An adhesive mat (100) according to any one of the preceding claims in which the barrier film (2) is formed by film of polymer materials chosen among polypropylene, polyethylene, polyester, polyamide, polyolephin and cornstarch derived polymers, the material of the film (2) being preferably the same material as that of the non-woven fabric (5) of the layer (1).

8. An adhesive mat (100) according to any one of the preceding claims, in which the non-woven fabric (5) of the layer (1) has prints or patterns on its exposed surface or is coloured.

9. An adhesive mat (100) according to any one of the preceding claims further comprising hot melt glues between the layer (1) of non woven fabric (5) and the barrier film (2).

10. An adhesive mat (100) according to any one of the preceding claims in the form of a roll or of a shaped piece with a pre-set outline and size.
